# EUROPÄISCHE PATENTSCHRIFT

(11) **EP 3 036 058 B1**
(45) Veröffentlichungstag und Bekanntmachung des Hinweises auf die Patenterteilung: **17.11.2021**
(21) Anmeldenummer: 14725349.6
(22) Anmeldetag: 09.05.2014
(51) Int. Cl.: B23B 5/16

(54) **VORRICHTUNG UND VERFAHREN ZUM ENTGRATEN VON ROHREN**
DEVICE AND METHOD FOR THE DEBURRING OF TUBES
DISPOSITIF ET PROCÉDÉ D'ÉBAVURAGE DE TUBES

(30) Priorität: 24.08.2013 CH 14442013
(43) Veröffentlichungstag der Anmeldung: 29.06.2016
(73) Patentinhaber: Wepfer, Hans, 8471 Berg-Dägerlen (CH); Wohlgensinger, Kenneth, 8442 Hettlingen (CH)
(72) Erfinder: Wepfer, Hans, 8471 Berg-Dägerlen (CH); Wohlgensinger, Kenneth, 8442 Hettlingen (CH)
(74) Vertreter: Keller Schneider Patent- und Markenanwälte AG (Bern)
(86) Internationale Anmeldenummer: PCT/CH2014/000064
(87) Internationale Veröffentlichungsnummer: WO 2015/027347

(56) Entgegenhaltungen:
- EP-A1- 2 364 802
- WO-A1-92/20485
- DE-U1- 9 112 499
- FR-A- 1 291 624
- SU-A1- 1 731 445
- US-A- 4 207 786
- US-A- 4 580 932

## Beschreibung

### Technisches Gebiet

Die vorliegende Erfindung betrifft eine Vorrichtung zum Entgraten von Rohren, insbesondere von Rohrenden, gemäß dem Oberbegriff des Anspruchs 1. Eine derartige Vorrichtung ist aus der US 4 580 932 A. bekannt. Die Erfindung betrifft außerdem ein Verfahren zur Verwendung einer solchen Vorrichtung.

### Stand der Technik

Grundsätzlich werden in einer Vielzahl von bau- und installationstechnischen Anwendungsgebieten aus vorgefertigten Rohrlängen bedarfsgerechte Stücke geschnitten. Bei diesen Schneidaktionen verbleiben an den Rohren Grate, welche es zu entfernen gilt. Die Grate können ungeachtet des Rohrmaterials bestehen. So können diese Rohre je nach Anwendung aus Kunststoff oder Metall bestehen.

Zur Entgratung vor Ort sind im Markt spezielle Entgratungswerkzeuge erhältlich, die als Aufsatz an konventionelle, rotationsgetriebene Maschinen, wie zum Beispiel Bohrmaschinen, aufgesetzt werden können. Solche Vorrichtungen verfügen über eine konkave Form, die zur Aufnahme des Rohrendes geeignet ist und welche mittels einer innerhalb der konkaven Form angebrachten Klinge die Rohrenden entgraten. Solche Vorrichtungen sind allerdings mit diversen Nachteilen behaftet. So lassen sich die konkaven Formen nur an eine bedingte Rohrgröße, nämlich abhängig von ihrem Durchmesser, anpassen. Daher muss ein Techniker ein entsprechendes Arsenal an solchen Werkzeugen bei sich haben, um auf verschiedene Rohrdurchmesser vorbereitet zu sein. Außerdem sind diese Vorrichtungen auch im Gebrauch umständlich. Da sie über keinerlei Federung verfügen, sind sie nur mit bestimmten Materialien respektive Rotationsgeschwindigkeiten der verwendeten Bohrmaschinen zu gebrauchen. Ansonsten riskiert man, die Rohrenden, die Bohrmaschine oder beides zu beschädigen.

Flexibler sind dabei Rohrentgrater mit einer konischen Form, an deren Konusmantel eine Klinge angebracht ist. Eine solche Vorrichtung ist zum Beispiel in der CH 703 563 A2 (Wepfer-Jucker et al.) gezeigt. Dort wird ein Rohrentgrater vorgeschlagen, bei dem eine Schneide in einer Nut eingelassen ist und die Schneide über ein Federelement derart federbelastet ist, dass es sich einer bestimmten Variabilität an Rohrdurchmessern automatisch anpasst. Selbst diese Vorrichtung ist aber nur mit einem vergleichsweise engen Bereich an Rohrdurchmessern zu verwenden. Ausserdem ist ein solcher konischer Aufsatz vergleichsweise schwer und erfordert einen entsprechend starken Rotationsantrieb, um zuverlässig zu entgraten.

Ein weiterer konischer Rohrentgrater ist in der WO 92/20485 A1 (Taylor, C. et al.) gezeigt. Der Rohrentgrater hat eine im Wesentlichen konische Werkzeugform und eine im Werkzeugkopf vorgenommene Bohrung, welche eine geführte Klinge enthält, die an einer Seitenkante des Konus aus dem Inneren ragt. Auch dieser Entgrater verfügt über eine Feder und lässt sich somit innerhalb eines gewissen Bereiches an verschiedene Rohrendendurchmesser anpassen. Die Anpassungsfähigkeit ist allerdings analog wie zur CH 703 563 A2 oben eingeschränkt. Ausserdem erzeugt die vergleichsweise große Kontaktfläche des Konus mit dem zu entgratenden Rohrende einen vergleichsweise hohen Reibungsverlust und kann bei entsprechend empfindlichen Materialien zu ungewünschter Wärmeentwicklung führen.

Ein Entgratungswerkzeug ist auch in der US 4,580,932 (Deppermann) beschrieben. Das Entgratungswerkzeug ist insbesondere zum Entgraten nicht runder Löcher ausgelegt Die konische Spitze des Werkzeuges wird dabei in das zu entgratende Loch gesetzt. Wenn Kraft aufgewendet wird, bewegt sich der Schaft des Werkzeugs auf das Werkstück zu, so dass die federgelagerte Klinge heraustritt und die Grate entfernt.

Es ist somit eine Aufgabe der vorliegenden Erfindung, eine Vorrichtung zum Entgraten von Rohren bereitzustellen, welche für ein breites Spektrum an Rohrdurchmessern geeignet ist sowie einfach einzusetzen ist.

### Darstellung der Erfindung

Diese Aufgabe wird durch eine Vorrichtung zum Entgraten von Rohren, insbesondere Rohrenden, gemäß Anspruch 1 bzw. durch ein Verfahren gemäß Anspruch 14 gelöst.

Demnach betrifft ein Aspekt der vorliegenden Erfindung eine Vorrichtung zum Entgraten von Rohren, insbesondere Rohrenden. Die Vorrichtung umfasst ein distales und ein proximales Ende. Im Sinne der vorliegenden Erfindung ist das distale Ende der Vorrichtung das dem Werkstück zugewandte Ende der Vorrichtung. Entsprechend handelt es sich beim proximalen Ende der Vorrichtung um das einem Werkstück abgewandte Ende der Vorrichtung. Die erfindungsgemäße Vorrichtung umfasst weiter einen im Wesentlichen konischen Grundkörper mit einer Mehrzahl an Kontaktflächen. Im Sinne der vorliegenden Erfindung soll als im Wesentlichen konischer Grundkörper ein Grundkörper verstanden werden, der in seiner Außenabmessung und insbesondere in Rotation um seine Längsachse eine geometrische Kegelform beschreibt. Dementsprechend können Abweichungen von einer strikten Kegelform durch Ausnehmungen, Nuten und Wölbungen vorgesehen sein. Dies entspräche noch immer einer im Wesentlichen konischen Grundform. Eine Mehrzahl an Kontaktflächen kann eine Anzahl Kontaktflächen von zwei oder mehr sein. Bevorzugt handelt es sich bei der Anzahl an Kontaktflächen um zwischen zwei und fünf, besonders bevorzugt drei Kontaktflächen. Im Sinne der vorliegenden Erfindung ist eine Kontaktfläche eine Außenfläche des konischen Grundkörpers, die im Betrieb mit dem zu bearbeitenden Werkstück in physischen Kontakt kommt. So kann eine Mehrzahl an Kontaktflächen zum Beispiel dadurch gebildet werden, dass die im Wesentlichen konische Grundkörperform die Mantelfläche durch Ausnehmungen in eine Mehrzahl an Kontaktflächen unterteilt. Somit kann im Einklang mit der Erfindung die Anzahl der Kontaktflächen zunehmen, während gleichzeitig die Kontaktfläche insgesamt abnimmt. Die erfindungsgemäße Vorrichtung weist zudem einen Schaft auf. Weiter umfasst die Vorrichtung eine Führungskammer, in der eine Führungsbuchse verschiebbar gelagert ist. Weiter ist eine Feder in der Führungskammer dergestalt angeordnet, dass eine Rückstellkraft auf die besagte Führungsbuchse ausgeübt wird. An dieser Führungsbuchse ist zudem eine Klinge ablösbar befestigbar. Entlang einer Aussenseite des konischen Grundkörpers erstreckt sich in Längsrichtung eine Führungsnut. Durch diese Führungsnut ist die Klinge geführt. Die Führungsbuchse ist innerhalb der Führungskammer verschiebbar und schwenkbar gelagert. In einer besonderen Ausführungsform verjüngt sich der konische Grundkörper vom proximalen zum distalen Ende hin und beschreibt in einer besonderen Ausführungsform einen Öffnungswinkel von 10° bis 20°, besonders bevorzugt von 15°. Dieser Öffnungswinkel ist definiert durch eine virtuelle Verlängerung einer Kontaktfläche bis hin zu einer Kegelspitze, welche diese Kontaktfläche als Verlängerung der Längsachse der Vorrichtung schneidet. Der so beschriebene Winkel ist der Öffnungswinkel im Sinne der vorliegenden Anmeldung.

In einer besonderen Ausführungsform weist der im Wesentlichen konische Grundkörper Aussparungen auf. Bevorzugt weist er dergestalt Aussparungen auf, dass insgesamt drei Kontaktflächen gebildet werden, die so ausgelegt sind, dass sie im Betrieb das zu entgratende Rohr berühren. Mit dieser Ausführung kann bei der erfindungsgemässen Vorrichtung an Gewicht gespart werden. Zudem verringert die insgesamt reduzierte Kontaktfläche Reibungsverluste und es entsteht weniger Reibungswärme. Auch können die Ausnehmungen dazu beitragen, dass durch die Vorrichtung abgetragenes Gratmaterial besser abgeleitet wird und die Bearbeitungsstelle zusätzlich besser belüftet ist. Die Aussparungen können die Form von Eindellungen der Kegeloberfläche des im Wesentlichen konischen Grundkörpers einnehmen.

In einer weiteren besonderen Ausführungsform ist die Führungskammer durch eine zylindrische Bohrung gebildet. Diese Bohrung verläuft parallel zu einer der Kontaktflächen. In dieser besonderen Ausführungsform sind die Kontaktflächen zum Beispiel ungleich ausgestaltet. Die breitere der drei Kontaktflächen dient zur Aufnahme der zylindrischen Bohrung. Sie verläuft im Wesentlichen parallel zur konischen Aussenfläche, die am breitesten ist und erstreckt sich vom proximalen zum distalen Ende des konischen Grundkörpers. In diesem besonderen Fall verläuft die Bohrung in einem Winkel von zwischen 10° und 20° bezüglich der Längsachse des Schaftes respektive von besonders bevorzugt ungefähr 15° zur Längsachse des Schaftes.

In einer besonderen Ausführungsform ist der Schaft so ausgestaltet, dass er an einen Rotationsantrieb gekoppelt werden kann. Vorzugsweise ist der Schaft so ausgestaltet, dass er an eine konventionellen Akku-/Bohrmaschine koppelbar ist.

In einer besonderen Ausführungsform weist die Führungsbuchse eine Buchsenführung auf, welche ausgelegt ist, die Verschiebbarkeit der Führungsbuchse innerhalb der Führungskammer zu führen. Besonders bevorzugt ist die Buchsenführung so ausgelegt, dass sie die Verschiebbarkeit der Führungsbuchse innerhalb der Führungskammer an ihrem distalen Ende zu führen vermag.

In einer besonderen Ausführungsform weist die Buchsenführung eine Mehrzahl an Gewinden auf. Besonders bevorzugt weist sie vier Gewinde auf. Diese Gewinde können geeignet sein, um Schrauben mit der Buchsenführung zu verbinden. Insbesondere sind solche Gewinde geeignet, um mittels Schrauben die Klinge mit der Buchsenführung zu verbinden. So entsteht eine Wirkverbindung zwischen der Klinge und der Buchsenführung.

In einer besonderen Ausführungsform ist die Klinge an verschiedenen Stellen entlang der Führungsbuchse ablösbar befestigbar. Dies kann zum Beispiel dadurch bewerkstelligt werden, dass die Klinge an einem der an verschiedenen Stellen der Buchsenführung vorgesehenen Gewinde verschraubt wird.

In einer besonderen Ausführungsform weist die Führungsbuchse einen Führungskragen auf. Dieser ist ausgelegt, die Verschiebbarkeit der Führungsbuchse innerhalb der Führungskammer zu führen. In einer weiteren besonderen Ausführungsform weist die Führungsbuchse an ihrem proximalen Ende einen Führungskragen auf. Dieser ist so ausgestaltet, dass er die Führungsbuchse innerhalb der Führungskammer an ihrem proximalen Ende zu führen vermag. Vorzugsweise ist der Führungskragen vergleichsweise schmal ausgestaltet bezüglich der Gesamtlänge der Führungsbuchse. Besonders bevorzugt ist der Führungskragen so ausgestaltet, dass er passgenau und formschlüssig an die Innenfläche der Führungskammer anschließt. Somit ermöglicht der Führungskragen eine geführte Bewegung in der Längsrichtung der Führungskammer der Führungsbuchse und erlaubt gleichzeitig eine geringe Schwenkbewegung der Führungsbuchse. Dies bedeutet, dass die Führungsbuchse an ihrem proximalen Ende keine Lateralbewegung zulässt, aber an ihrem distalen Ende eine von der Innenwand der Führungskammer begrenzte Schwenkbarkeit umfasst. Dabei kann der Führungskragen sowohl als Führung für die Verschiebbarkeit in Längsrichtung der Führungsbuchse dienen als auch als Schwenkgelenk für die Auslenkbewegung der Führungsbuchse in distaler Richtung.

In einer besonderen Ausführungsform ist der Führungskragen entlang seines äußeren Durchmessers abgeschrägt oder rund ausgestaltet, so dass der Führungskragen zur Führungskammer einen Berührungsradius aufweist. Die Innenwand der Führungskammer bildet dann die Tangente zu einem Berührungspunkt zwischen Führungskragen und Führungskammer am Berührungsradius aus. In dieser Ausführungsform ist eine Gelenkbewegung und die Wirkung als Schwenkgelenk des Führungskragens verbessert. Dadurch lassen sich auch im Vergleich dickere Führungskragen verwenden, was insgesamt die Stabilität verbessert. In dieser besonderen Ausführungsform definiert der Berührungsradius die Schwenkbarkeit für die Auslenkbewegung der Führungsbuchse in distaler Richtung.

In einer weiteren, alternativen Ausführungsform ist der Führungskragen mit einem konkaven, kugelbasierten Lager ausgestattet, welcher die Führungsbuchse innerhalb der Führungskammer an ihrem proximalen Ende zu führen vermag. In einer besonderen Ausführungsform ist der Führungskragen entlang seinem Aussendurchmesser konkav, so dass Führungsrollen eingebracht werden können, so dass eine Wälzführung zustande kommt.

In einer besonderen Ausführungsform ist der Führungskragen aus Stahl, insbesondere ist der Führungskragen ein integraler Bestandteil der Führungsbuchse. Alternativ kann der Führungskragen auch aus Kunststoff sein, der als Kragen auf die Führungsbuchse aufgepresst wurde. Diese Ausführungsform könnte vorsehen, dass der Führungskragen auswechselbar ausgestaltet ist. Somit wird die Lebensdauer der gesamten Vorrichtung verlängert.

In einer weiteren besonderen Ausführungsform weist die Führungsbuchse an ihrem distalen Ende einen Anschlag auf. Dieser Anschlag kann zum Beispiel die Anfangspositionierung der Führungsbuchse übernehmen. Wird nun im Betrieb beispielsweise eine Kraft auf die Klinge ausgeübt, so wird die Feder gestaucht und gegen die Rückstellkraft am Anschlag die Führungsbuchse entsprechend entlang der Führungskammer verschoben. Dabei wird eine Schwenkbewegung der Führungsbuchse an ihrem distalen Ende ermöglicht, während das proximale Ende der Führungsbuchse in der Führungskammer durch den Führungskragen linear geführt ist.

In einer besonderen Ausführungsform weist die Klinge eine Bohrung auf. Diese Klinge ist mittels einer Schraube an der Führungsbuchse ablösbar befestigbar. Besonders bevorzugt kann die Klinge in dieser Ausführungsform an verschiedenen vordefinierten Gewinden an der Führungsbuchse ablösbar befestigt werden.

In einer weiteren besonderen Ausführungsform umfasst die ablösbar befestigte Klinge eine erste Schneide und eine zweite Schneide. Die Klinge ist dergestalt befestigbar, dass die erste Schneide oder die zweite Schneide distal ausgerichtet ist. Im Betrieb wäre es dann möglich, eine stumpfe Schneide rasch und unkompliziert auszuwechseln. Die ablösbar befestigte Klinge kann mittels einer Schraubverbindung abgelöst, um 180° gedreht und anschliessend wieder befestigt werden.

In einer besonderen Ausführungsform weist die Klinge an ihren Schneiden je eine nicht schneidende Sohle für das Entgratungsende auf. Im Betrieb werden sowohl eine äußere als auch eine innere Kante, das heißt eine äußere und innere Braue, eines Rohrendes entgratet. Während gleichzeitig innen und außen entgratet wird, befindet sich das abzurundende Rohrende in der Sohle.

In einer weiteren besonderen Ausführungsform ist die Führungskammer mittels eines Verschlusses verriegelt. Dieser Verschluss kann entfernbar sein. Dadurch ließe sich zum Beispiel eine verbrauchte Feder ersetzen oder ein allfälliger Defekt der Führungsbuchse beheben. Dies führt zu einer Verlängerung der Lebensdauer des Werkzeuges sowie einer Materialersparnis, da die Verbrauchsteile auswechselbar wären. Vorzugsweise riegelt der Verschluss die Führungskammer an der Außenseite des konischen Grundkörpers gegen außen ab. Ebenfalls denkbar wäre es, die Feder einer bestimmten Federkonstante mit einer Feder einer anderen bestimmten Federkonstante auszutauschen, wenn dies für die Bearbeitung eines bestimmten Rohrmaterials erforderlich wäre.

In einer weiteren besonderen Ausführungsform ist der konische Grundkörper einstückig ausgebildet. Bevorzugt ist der konische Grundkörper aus Werkzeugstahl gefertigt.

In einer besonderen Ausführungsform ist die Vorrichtung ausgelegt, um Rohre mit einem Durchmesser von zwischen 6 und 60 mm, vorzugsweise von zwischen 9 und 54 mm, besonders bevorzugt von zwischen 15 und 42 mm zuverlässig zu entgraten.

Die erfindungsgemäße Vorrichtung ist vielseitig einsetzbar, ungeachtet des Materials der zu entgratenden Rohre. Insbesondere ist sie auch geeignet, um Chromstahlrohre zuverlässig und sicher zu entgraten. Die erfindungsgemässe Vorrichtung kann sich den unterschiedlichen Wandstärken der zu entgratenden Rohre anpassen.

Ein weiterer Aspekt der vorliegenden Erfindung betrifft die Verwendung einer erfindungsgemäßen Vorrichtung zur Entgratung von Rohren, insbesondere Rohrenden. Dazu wird die Vorrichtung mit ihrem distalen Ende in ein Rohr, insbesondere in ein Rohrende gedrückt und mittels eines Rotationsantriebes um ihre Längsachse rotiert.

Dabei schabt die Klinge die Kante des Rohres ab und eventuelle Grate werden sicher und nachhaltig entfernt.

Vorteilhafte Ausführungsformen und Merkmalskombinationen der Erfindung sind nachfolgend im Detail beschrieben und grundsätzlich definiert durch die Gesamtheit der Patentansprüche.

### Kurze Beschreibung der Zeichnungen

Im Folgenden wird die Erfindung anhand konkreter Ausführungsformen und Figuren weiter erläutert, ohne jedoch auf diese eingeschränkt zu sein.

Die Figuren zeigen:
- Figur 1: zeigt schematisch eine erfindungsgemäße Vorrichtung zur Entgratung von Rohren im Seitenschnitt;
- Figur 2: zeigt schematisch eine erfindungsgemäße Vorrichtung zum Entgraten von Rohren von oben;
- Figur 3: zeigt schematisch eine Klinge für eine erfindungsgemäße Vorrichtung;
- Figur 4: zeigt schematisch im Seitenschnitt die Verwendung einer erfindungsgemäßen Vorrichtung mit einem vergleichsweise kleinen Rohr;
- Figur 5: zeigt schematisch die Verwendung einer erfindungsgemäßen Vorrichtung bei einem Rohr mit vergleichsweise großem Durchmesser;
- Figur 6: zeigt schematisch die Verwendung einer erfindungsgemäßen Vorrichtung bei einem Rohr mit vergleichsweise dünnen Rohrwänden;
- Figur 7: zeigt schematisch die Verwendung einer erfindungsgemäßen Vorrichtung bei einem Rohr mit vergleichsweise dickwandigen Rohrwänden. Grundsätzlich sind in den Figuren gleiche Teile mit gleichen Bezugszeichen versehen.

### Wege zur Ausführung der Erfindung

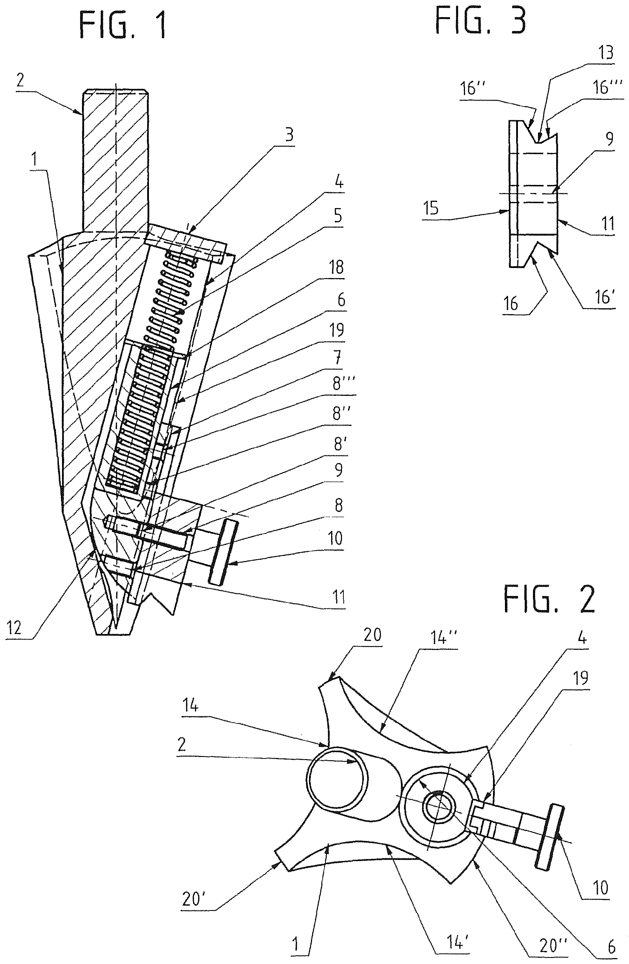

Die in der Figur 1 schematisch gezeigte Vorrichtung zum Entgraten von Rohren umfaßt einen im Wesentlichen konischen Grundkörper 1, der an einen Schaft 2 anschließt und das distale Ende der Vorrichtung bildet. Der konische Grundkörper 1 ist insgesamt von einer strikt kegelförmigen Form abweichend, was durch die entsprechenden gestrichelten Linien, welche Ausnehmungen darstellen sollen, gezeigt ist. Eine Längsachse erstreckt sich in Verlängerung des Schaftes 2 durch den konischen Grundkörper und bis zur Spitze der Vorrichtung. Im vorliegenden Beispiel sind die Vorrichtung und deren im Wesentlichen konischer Grundkörper dreiflügelig ausgestaltet. Ein erster Flügel ist stärker ausgebildet als die beiden übrigen Flügel und beherbergt eine zylindrische Bohrung, welche als Führungskammer 4 dient. Die Führungskammer 4 beherbergt eine Führungsbuchse 6, auf welche eine Rückstellkraft über die Feder 5 wirkt.

Am proximalen Ende der Führungskammer 4 findet sich ein Verschluss 3, der wiederum die Feder 5 arretiert. Die Führungsbuchse 6 ist gegen die Rückstellkraft der Feder 5 in Längsrichtung der Führungskammer 4 verschiebbar. Diese Verschiebungsbewegung entlang der Führungskammer 4 ist linear über einen Führungskragen 18, welcher am proximalen Ende der Führungsbuchse 6 angebracht ist, sichergestellt. Am distalen Ende der Führungsbuchse 6 ist eine Buchsenführung 7 vorgesehen, welche über eine Reihe von Bohrungen verfügt mit entsprechenden Gewinden, 8, 8', 8", 8"'. Eine Klinge 11 ist mittels einer Schraube 10 an jedem beliebigen Gewinde 8, 8', 8", 8"' ablösbar befestigt. Im vorliegenden Beispiel ist die Klinge 11 am zweiten Gewinde 8' vom distalen Ende aus betrachtet, befestigt. Die Klinge 11 selbst verfügt über eine Bohrung 9, durch welche sich die Schraube in das Gewinde 8' erstreckt.

Die hier beispielhaft gezeigte Vorrichtung zur Entgratung von Rohren hat somit eine Klinge 11, welche über die Verschiebbarkeit der Führungsbuchse 6 entlang einer Führungsnut 19 innerhalb der Führungskammer 4 verstellbar an verschiedene Rohrdurchmesser anpassbar ist. Die Verstellmöglichkeit wird zusätzlich durch die entlang der Führungsnut 19 an der Führungsbuchse 6 vorgesehenen Gewinde 8, 8', 8", 8"' zusätzlich erweitert. Ein Anschlag 12 dient dazu, die Anfangspositionierung zu ermöglichen. Im Betrieb wird durch Anpressen der Vorrichtung Druck gegen die Rückstellkraft der Feder, welche durch den Verschluss 3 gehalten wird, ausgeübt. Der Schaft 2 dient dazu, an einen Rotationsantrieb gekoppelt zu werden. Wie aus der Figur 1 ersichtlich, kann die Führungsbuchse 6 an ihrem distalen Ende eine bestimmte Schwenkbewegung, welche durch den Anschlag 12 geführt ist, vornehmen, während sie an ihrem proximalen Ende durch den Führungskragen, welcher formschlüssig an die Führungskammer 4 anformt, an einer Schwenkbewegung gehindert wird, gleichzeitig aber linear in Verschiebungsrichtung und entgegen der Rückstellkraft der Feder 5 verschiebbar ist.

Durch diesen Aufbau lassen sich zuverlässig Rohre mit unterschiedlichen Rohrdurchmessern und Wandstärken bearbeiten.

In der Figur 2 wird die erfindungsgemäße Vorrichtung von oben gezeigt. Der Schaft 2 endet in den im Wesentlichen konischen Grundkörper 1. Besonders gut ersichtlich sind in der Figur 2 die Ausnehmungen 14, 14', 14", welche zu einer Material- und Gewichtsersparnis führen sowie die Größe der Kontaktfläche zwischen dem konischen Grundkörper 1 und dem zu bearbeitenden Rohr reduzieren. Dies führt wiederum zu geringeren Reibungsverlusten und einer verbesserten Wärmeabfuhr. Die Ausnehmungen 14, 14', 14" sind so an den konischen Grundkörper 1 vorgenommen, dass insgesamt drei Kontaktflächen 20, 20' und 20" entstehen. Die Vorrichtung ist spiegelsymmetrisch, das heißt nicht alle Kontaktflächen sind gleich groß. Während eine erste Kontaktfläche 20 und eine zweite Kontaktfläche 20' spiegelsymmetrisch entlang einer Symmetrieachse des der Vorrichtung sind, ist eine dritte Kontaktfläche 20" größer ausgebildet. Diese Kontaktfläche beherbergt in ihrem Inneren die Führungskammer 4, welche in der Figur 2 von oben gesehen wird und die an ihrer Seite parallel zur Kontaktfläche 20" eine Führungsnut 19 aufweist. Aus dieser Führungsnut 19 ragt die Klinge, welche mittels einer Schraube 10 an eine aus dieser Perspektive der Figur 2 nicht sichtbare Führungsbuchse befestigbar ist. Von oben aber ersichtlich ist der Führungskragen 6, welcher diese Führungsbuchse innerhalb der Führungskammer 4 linear führt. Der Verschluss 3 wurde zur besseren Illustration entfernt.

Vorzugsweise ist die Vorrichtung aus einem robusten Material gefertigt. Im vorliegenden Fall wurde die Vorrichtung aus konventionellem Werkzeugstahl hergestellt.

Die Figur 3 zeigt eine für die erfindungsgemäße Vorrichtung besonders geeignete Klinge 11. Die Klinge 11 verfügt über zwei gegenüberliegende Klingenbereiche mit je zwei Schneiden 16, 16', 16", 16"', eine erste Schneide 16, 16' und eine zweite Schneide 16", 16"'. Jede dieser Klingenseiten verfügt über eine Sohle 13, welche nicht schneidend ausgelegt ist. Die Klingenpassung 15 dient dazu, die Klinge 11 im montierten Zustand in der Führungsnut zu stabilisieren und eine entsprechende Führung der Klinge in Richtung der Verschiebbarkeit der Führungsbuchse zu ermöglichen.

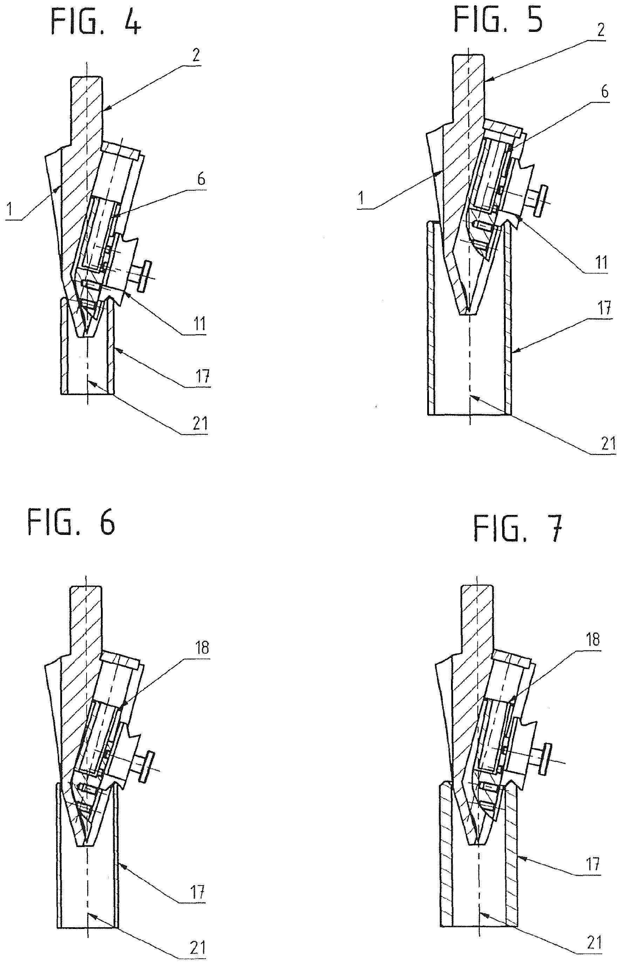

In der Figur 4 ist schematisch gezeigt, wie ein Rohr 21 mit einer bestimmten Rohrwanddicke 17 von der erfindungsgemäßen Vorrichtung entgratet werden kann. Die Vorrichtung wird mittels des Schaftes 2 an eine Bohrmaschine (nicht gezeigt) angeschlossen und dessen distales Ende mit dem im Wesentlichen konischen Grundkörper 1 wird in das offene und zu entgratende Rohrende gesteckt. Im vorliegenden Fall wurde das dritte Gewinde vom distalen Ende aus für die Befestigung der Klinge gewählt. Die Klinge ist über die Feder derart geführt, dass sie stets den korrekten Anpressdruck an die Rohrwand 17 aufweist. Dabei wird die Kante der Rohrwand 17 in die Sohle der Klinge geführt und die beiden Brauen des Rohres werden mit den Klingenseiten entgratet. Dabei rotiert die Vorrichtung um die eigene Längsachse.

In der Figur 5 ist die Anpassung an ein vergleichsweise größer durchmessendes Rohr 21 ersichtlich. Dabei wird gegen die Rückstellkraft der Feder die Führungsbuchse 6 in proximale Richtung nach hinten verschoben. Die Klinge ist ebenfalls zur besseren Bedienung des weiteren Rohrdurchmessers in das vierte und letzte Gewinde aus dem vorliegenden Beispiel versetzt worden.

Die Figur 6 illustriert, wie mit der erfindungsgemäßen Vorrichtung auch Rohre mit vergleichsweise geringem Durchmesser und dünner Rohrwand entgratet werden können. Dazu wird analog wie in Figur 5 das Letzte der Gewinde verwendet.

Die Figur 7 wiederum zeigt die Entgratung eines Rohres 21 mit einer vergleichsweise sehr dicken Rohrwand 17. Dabei sind besonders gut die Schwenkbarkeit der Führungsbuchse innerhalb der Führungskammer und dessen Vorteil für die Anpassbarkeit an unterschiedliche Rohre ersichtlich. Der Führungskragen 18 dient als Gelenk und ist zu diesem Zweck vergleichsweise schmal. Die Dicke des Führungskragens beeinflusst die Schwenkbarkeit des Gelenkes. Je nach seiner Ausgestaltung kann die Dicke zwischen 0.5 und 5 mm betragen; bei einem kantigen Führungskragen vorzugsweise zwischen 2 und 3 mm, während bei einem abgerundeten oder abgeschrägten Führungskragen der Durchmesser um die 5 mm bis 10 mm betragen kann. Letztlich entscheidet die Gesamtdimensionierung des Entgratungswerkzeugs über die absolute Dicke des Führungskragens, und ist dem Fachmann für die beabsichtigte Anwendung überlassen. Der Führungskragen 18 hat somit eine Doppelfunktion als Gelenk für die Schwenkbarkeit des distalen Kopfes der Führungsbuchse, sowie als Führungshilfe und Lagerung in der distalproximal Verschiebbarkeit der Führungsbuchse.

Natürlich kann der Führungskragen 18 auch dazu dienen, die Klinge nach innen sowie nach außen anzupassen.

Mit der in der vorliegenden Ausführungsform beispielhaft gezeigten Entgratungsvorrichtung lassen sich Rohre 21 mit einem Durchmesser von zwischen 9 und 54 mm und einer Rohrwanddicke 17 von zwischen 0.5 und 5 mm zuverlässig entgraten.

## Patentansprüche

1. Vorrichtung zum Entgraten von Rohren (17), insbesondere Rohrenden, umfassend:
a) ein distales und ein proximales Ende;
b) einen im Wesentlichen konischen Grundkörper (1) mit einer Mehrzahl an Kontaktflächen (20, 20', 20");
c) einen Schaft (2);
d) eine Führungskammer (4), in der eine Führungsbuchse (6) verschiebbar gelagert ist, und in der eine Feder dergestalt angeordnet ist, dass eine Rückstellkraft auf die Führungsbuchse (6) ausgeübt wird, und wobei an der Führungsbuchse (6) eine Klinge (11) ablösbar befestigt ist, und
e) eine Führungsnut (19), welche sich in Längsrichtung entlang einer Aussenseite des konischen Grundkörpers erstreckt und durch welche die Klinge (11) geführt ist
**dadurch gekennzeichnet, dass**
die Führungsbuchse (6) innerhalb der Führungskammer (4) verschiebbar und schwenkbar gelagert ist.

2. Vorrichtung gemäß Anspruch 1, wobei der im Wesentlichen konische Grundkörper (1) ein proximales und ein distales Ende aufweist und sich von seinem proximalen zu seinem distalen Ende hin konisch verjüngt.

3. Vorrichtung gemäß Anspruch 1, wobei der im Wesentlichen konische Grundkörper (1) Aussparungen (14, 14', 14") aufweist, insbesondere dergestalt Aussparungen aufweist, dass drei Kontaktflächen (20, 20', 20") bestehen, welche so ausgelegt sind, dass sie im Betrieb das zu entgratende Rohr berühren.

4. Vorrichtung gemäß einem der Ansprüche 1 bis 3, wobei die Führungskammer (4) durch eine zylindrische Bohrung gebildet ist, die parallel zu einer der Kontaktflächen (20") verläuft, insbesondere verläuft die Bohrung in einem Winkel von zwischen 10° und 20° bezüglich Längsachse des Schaftes (2).

5. Vorrichtung gemäß einem der Ansprüche 1 bis 4, wobei sich der Schaft (2) an dem proximalen Ende der Vorrichtung erstreckt und so ausgestaltet ist, dass er an einen Rotationsantrieb gekoppelt werden kann.

6. Vorrichtung gemäß einem der Ansprüche 1 bis 5, wobei die Führungsbuchse (6) eine Buchsenführung (7) aufweist, welche ausgelegt ist die Verschiebbarkeit der Führungsbuchse (6) innerhalb der Führungskammer (4) zu führen, insbesondere die Verschiebbarkeit der Führungsbuchse (6) innerhalb der Führungskammer (4) an ihrem distalen Ende zu führen.

7. Vorrichtung gemäß Anspruch 6, wobei die Buchsenführung (7) eine Mehrzahl von Gewinden (8, 8', 8", 8"') aufweist, insbesondere vier Gewinde (8, 8', 8", 8"') aufweist.

8. Vorrichtung gemäß einem der Ansprüche 6 oder 7, wobei die Klinge (11) an verschiedenen Stellen entlang der Führungsbuchse (6) ablösbar befestigbar ist.

9. Vorrichtung gemäß einem der Ansprüche 1 bis 8, wobei die Führungsbuchse (6) einen Führungskragen (18) aufweist, welcher ausgelegt ist die Verschiebbarkeit der Führungsbuchse (6) innerhalb der Führungskammer (4) zu führen, insbesondere weist die Führungsbuchse (6) an ihrem proximalen Ende einen Führungskragen (18) auf, der so ausgestaltet ist, dass er die Führungsbuchse (6) innerhalb der Führungskammer (4) an ihrem proximalen Ende führt.

10. Vorrichtung gemäß einem der Ansprüche 1 bis 9, wobei die Führungsbuchse (6) an ihrem distalen Ende einen Anschlag (12) aufweist.

11. Vorrichtung gemäß einem der Ansprüche 1 bis 10, wobei die Klinge (11) eine Bohrung aufweist und mittels einer Schraube (10) an der Führungsbuchse (6) ablösbar befestigbar ist, insbesondere mittels der Schraube (10) an verschiedenen vordefinierten Gewinden (8, 8', 8", 8"') ablösbar befestigbar ist.

12. Vorrichtung gemäß einem der Ansprüche 1 bis 11, wobei die ablösbar befestigte Klinge (11) eine erste Schneide (16, 16') und eine zweite Schneide (16", 16"') aufweist und die Klinge dergestalt befestigbar ist, dass die erste Schneide (16, 16') oder die zweite Schneide (16", 16"') distal ausgerichtet ist.

13. Vorrichtung gemäß einem der Ansprüche 1 bis 12, wobei die Klinge an ihren Schneiden (16, 16', 16", 16"') je eine nichtschneidende Sohle (13) für ein Entgratungsende aufweist.

14. Verwendung einer Vorrichtung gemäß einem der Ansprüche 1 bis 13 zur Entgratung von Rohren (21), insbesondere Rohrenden (21), wobei die Vorrichtung mit ihrem distalen Ende in ein Rohr, insbesondere Rohrende (21) gedrückt wird und die Vorrichtung mittels eines Rotationsantriebs um ihre Längsachse rotiert wird.

## Claims

1. Device for deburring tubes (17), in particular tube ends, said device including:
a) A distal and a proximal end;
b) A substantially conical basic body (1) with a plurality of contact surfaces (20, 20', 20");
c) A shaft (2);
d) A guide chamber (4) in which a guide bushing (6) is displaceably mounted and in which a spring is arranged in such a manner that a restoring force is exerted onto the guide bushing (6), and wherein a blade (11) is releasably fastened on the guide bushing (6), and
e) A guide groove (19) which extends in the longitudinal direction along an outside surface of the conical basic body and by means of which the blade (11) is guided
**characterized in that**
the guide bushing (6) is mounted so as to be displaceable and pivotable inside the guide chamber (4).

2. Device according to Claim 1, wherein the substantially conical basic body (1) comprises a proximal and a distal end and is tapered from its proximal end toward its distal end.

3. Device according to Claim 1, wherein the substantially conical basic body (1) comprises recesses (14, 14', 14"), in particular comprises recesses in such a manner that there are three contact surfaces (20, 20', 20") which are designed such that in operation they contact the tube to be deburred.

4. Device according to one of Claims 1 to 3, wherein the guide chamber (4) is formed by a cylindrical bore which extends parallel to one of the contact surfaces (20"), in particular the bore extends at an angle of between 10° and 20° with reference to the longitudinal axis of the shaft (2).

5. Device according to one of Claims 1 to 4, wherein the shaft (2) extends from the proximal end of the device and is developed such that it is able to be coupled to a rotational drive.

6. Device according to one of Claims 1 to 5, wherein the guide bushing (6) comprises a bushing guide (7) which is designed to guide the displaceability of the guide bushing (6) inside the guide chamber (4), in particular to guide the displaceability of the guide bushing (6) inside the guide chamber (4) at its distal end.

7. Device according to Claim 6, wherein the bushing (7) comprises a plurality of threads (8, 8', 8", 8"'), in particular comprises four threads (8, 8', 8", 8"').

8. Device according to either of Claims 6 or 7, wherein the blade (11) is releasably fastenable at different places along the guide bushing (6).

9. Device according to one of Claims 1 to 8, wherein the guide bushing (6) comprises a guide collar (18) which is designed to guide the displaceability of the guide bushing (6) inside the guide chamber (4), in particular the guide bushing (6) comprises at its proximal end a guide collar (18) which is developed such that it guides the guide bushing (6) inside the guide chamber (4) at its proximal end.

10. Device according to one of Claims 1 to 9, wherein the guide bushing (6) comprises a stop (12) at its distal end.

11. Device according to one of Claims 1 to 10, wherein the blade (11) comprises a bore and is releasably fastenable on the guide bushing (6) by means of a screw (10), in particular is releasably fastenable at various pre-defined threads (8, 8', 8", 8"') by means of the screw (10).

12. Device according to one of Claims 1 to 11, wherein the releasably fastened blade (11) comprises a first cutting edge (16, 16') and a second cutting edge (16", 16"') and the blade is fastenable in such a manner that the first cutting edge (16, 16') or the second cutting edge (16", 16"') is oriented in a distal manner.

13. Device according to one of Claims 1 to 12, wherein the blade comprises one non-cutting bottom (13) for a deburring end on each of its cutting edges (16, 16', 16", 16"').

14. Use of a device according to one of Claims 1 to 13 for deburring tubes (21), in particular tube ends (21), wherein the device is pressed by way of its distal end into a tube, in particular tube end (21), and the device is rotated about its longitudinal axis by means of a rotational drive.

## Revendications

1. Dispositif d'ébavurage de tubes (17), en particulier d'extrémités de tubes, comportant :
a) une extrémité distale et une extrémité proximale ;
b) un corps de base (1) sensiblement conique doté d'une pluralité de surfaces de contact (20, 20', 20") ;
c) une queue (2) ;
d) une chambre de guidage (4) dans laquelle une douille de guidage (6) est montée mobile, et dans laquelle un ressort est disposé de telle sorte qu'une force de rappel est exercée sur la douille de guidage (6), et une lame (11) étant fixée de manière amovible à la douille de guidage (6), et
e) une rainure de guidage (19), laquelle s'étend dans la direction longitudinale le long d'un côté extérieur du corps de base conique et à travers laquelle la lame (11) est guidée,
**caractérisé en ce que**
la douille de guidage (6) est montée mobile et pivotante à l'intérieur de la chambre de guidage (4).

2. Dispositif selon la revendication 1, le corps de base (1) sensiblement conique comprenant une extrémité proximale et une extrémité distale et se rétrécissant de manière conique à partir de son extrémité proximale vers son extrémité distale.

3. Dispositif selon la revendication 1, le corps de base (1) sensiblement conique comprenant des évidements (14, 14', 14"), en particulier comprenant des évidements de telle sorte que trois surfaces de contact (20, 20', 20") existent, lesquelles sont configurées de telle sorte qu'elles sont en contact avec le tube à ébavurer lors du fonctionnement.

4. Dispositif selon l'une des revendications 1 à 3, la chambre de guidage (4) étant formée par un alésage cylindrique qui s'étend parallèlement à l'une des surfaces de contact (20"), en particulier l'alésage s'étendant suivant un angle compris entre 10° et 20° par rapport à l'axe longitudinal de la queue (2).

5. Dispositif selon l'une des revendications 1 à 4, la queue (2) s'étendant à l'extrémité proximale du dispositif et étant configurée de telle sorte qu'elle peut être accouplée à un entraînement rotatif.

6. Dispositif selon l'une des revendications 1 à 5, la douille de guidage (6) comprenant un guide de douille (7), lequel est configuré pour guider la mobilité de la douille de guidage (6) à l'intérieur de la chambre de guidage (4), en particulier pour guider la mobilité de la douille de guidage (6) à l'intérieur de la chambre de guidage (4) à son extrémité distale.

7. Dispositif selon la revendication 6, le guide de douille (7) comprenant une pluralité de filets (8, 8', 8", 8"'), en particulier comprenant quatre filets (8, 8', 8", 8"').

8. Dispositif selon l'une des revendications 6 ou 7, la lame (11) pouvant être fixée de manière amovible à différents emplacements le long de la douille de guidage (6) .

9. Dispositif selon l'une des revendications 1 à 8, la douille de guidage (6) comprenant un rebord de guidage (18), lequel est configuré pour guider la mobilité de la douille de guidage (6) à l'intérieur de la chambre de guidage (4), en particulier la douille de guidage (6) comprenant à son extrémité proximale un rebord de guidage (18) qui est configuré de telle sorte qu'il guide la douille de guidage (6) à l'intérieur de la chambre de guidage (4) à son extrémité proximale.

10. Dispositif selon l'une des revendications 1 à 9, la douille de guidage (6) comprenant une butée (12) à son extrémité distale.

11. Dispositif selon l'une des revendications 1 à 10, la lame (11) comprenant un alésage et pouvant être fixée de manière amovible à la douille de guidage (6) au moyen d'une vis (10), en particulier pouvant être fixée de manière amovible au niveau de différents filets (8, 8', 8", 8"') prédéfinis au moyen de la vis (10).

12. Dispositif selon l'une des revendications 1 à 11, la lame (11) fixée de manière amovible comprenant un premier tranchant (16, 16') et un deuxième tranchant (16", 16") et la lame pouvant être fixée de telle sorte que le premier tranchant (16, 16') ou le deuxième tranchant (16", 16"') soit orienté de manière distale.

13. Dispositif selon l'une des revendications 1 à 12, la lame comprenant au niveau de ses tranchants (16, 16', 16", 16"') respectivement un fond (13) non tranchant pour une extrémité d'ébavurage.

14. Utilisation d'un dispositif selon l'une des revendications 1 à 13 pour l'ébavurage de tubes (21), en particulier d'extrémités de tubes (21), le dispositif étant pressé par son extrémité distale dans un tube, en particulier une extrémité de tube (21), et le dispositif étant entraîné en rotation autour de son axe longitudinal au moyen d'un entraînement rotatif.
